# EUROPEAN PATENT APPLICATION

(11) **EP 4 439 349 A1**
(43) Date of publication of application: **02.10.2024**
(21) Application number: 24167827.5
(22) Date of filing: 29.03.2024
(51) Int. Cl.: G06F 21/50, G06F 21/60, G06F 21/62

(54) **SYSTEMS AND METHODS FOR ENFORCING DATA GOVERNANCE POLICIES**

(30) Priority: 31.03.2023 US 202363493343 P
(71) Applicant: QOHASH INC., Québec, QC G1K 3L7 (CA)
(72) Inventor: LE BOUTHILLIER, Jean, QUEBEC, G1K 3G5 (CA); PERICO, Luca, QUEBEC, G1W 3H6 (CA)
(74) Representative: Cristinelli, Luca

(57) **Abstract**

The disclosure offers a solution which allows for providing employees with automatic, instantaneous feedback when they take actions that may be in violation of data governance policies. A method for providing data governance policy feedback to a user includes detecting sensitive data within data assets accessible by an endpoint device, detecting a potentially noncompliant action involving the sensitive data performed by the user at the endpoint device, matching the potentially noncompliant action against a condition defined by a rule from a set of rules implementing the data governance policy, storing information relating to the potentially noncompliant action, the user, and the rule, and applying at least one remediation action from a set of remediation actions defined by the rule, the at least one remediation action including a workflow-disruptive action. A noncompliance level can be determined, such that the disruptiveness level of the remediation action increases as the noncompliance level increases.

## Description

### TECHNICAL FIELD

The technical field relates to data governance, and more specifically to systems and methods for automatically enforcing data governance policies and educating noncompliant individuals by providing immediate feedback.

### BACKGROUND

Given the importance of protecting sensitive data, organizations that deal with sensitive information, for instance companies dealing with sensitive client information, develop data governance policies that define rules to be followed by individuals such as employees when manipulating sensitive information.

Enforcement of these policies cause multiple problems. A suspicious action, for instance an employee accessing on a company server a file containing a large amount of sensitive data and saving it on their workstation, may trigger an alert that must be processed manually by a data security analyst. The analyst has to determine whether the action complies with the data policy and take corrective actions if appropriate, which may require interacting with the employee's manager. As an alternative to deploying a service that triggers automatic alerts, analysts can perform spot checks in employees' workstations. Ultimately, workforce managers are responsible for educating employees under their purview and having them follow the data policies and take corrective actions when they fail to do so. This workflow is generally inefficient, and sometimes entirely ineffective when managers do not take data protection seriously. It is reported that certain managers willingly disrupt data policy violation workflows.

Most policy violations are accidental, and driven by negligence or mere ignorance of the policies. When corrective actions are taken, most often a significant amount of time after the noncompliant action occurred, employees are rarely provided with a rationale as to how their actions violated the policy, and may end up unwittingly violating it again.

There is therefore a need to provide a solution which allows for providing employees with automatic, instantaneous feedback when they take actions that may be in violation of data governance policies.

### SUMMARY

According to an aspect, a method for providing data governance policy feedback to a user is provided. The method includes: detecting sensitive data within data assets accessible by an endpoint device; detecting, by a sensor, a potentially noncompliant action involving the sensitive data performed by the user at the endpoint device; matching the potentially noncompliant action against a condition defined by a rule from a set of rules implementing the data governance policy; storing information relating to the potentially noncompliant action, the user, and the rule; and applying at least one remediation action from a set of remediation actions defined by the rule, the at least one remediation action including a workflow-disruptive action.

In some embodiments, the method includes quantifying a noncompliance level of the potentially noncompliant action, wherein the noncompliance level is quantified based on at least one of: a predefined importance level of the rule; a frequency in which the rule is triggered or broken by the user; a quantity of sensitive data involved in the potentially noncompliant action; a type of sensitive data involved in the potentially noncompliant action; a combination of types of sensitive data; and a metric based on at least a behaviour of the user and a behaviour of a set of peers of the user, wherein the at least one remediation action from the set of remediation actions defined by the rule is selected based at least in part on the noncompliance level.

In some embodiments, detecting the sensitive data includes identifying a portion of text within the data asset matching a predefined pattern, the method further including counting a number of matches of the matched pattern within a scope of the data assets to obtain a quantity of the sensitive data detected, wherein: the condition defined by the rule is based at least in part on the quantity of the sensitive data detected; the noncompliance level is quantified based at least in part on the quantity of the sensitive data detected; and/or the at least one remediation action from the set of remediation actions defined by the rule is selected based at least in part on the quantity of the sensitive data detected.

In some embodiments, the method further includes assigning a class to the sensitive data, wherein the type of the sensitive data corresponds to the class of the sensitive data, and wherein: the condition defined by the rule is based at least in part on the class of the sensitive data; the noncompliance level is quantified based at least in part on the class of the sensitive data; and/or the at least one remediation action from the set of remediation actions defined by the rule is selected based at least in part on the class of the sensitive data.

In some embodiments, the method further includes measuring an age corresponding to at least one of a time elapsed since the sensitive data was first detected and a time elapsed since the data asset was created, wherein: the condition defined by the rule is based at least in part on the age; the noncompliance level is quantified based at least in part on the age; and/or the at least one remediation action from the set of remediation actions defined by the rule is selected based at least in part on the age.

In some embodiments, a disruptiveness level of the remediation action increases as the noncompliance level increases.

In some embodiments, applying the remediation action occurs in real-time with detecting the potentially noncompliant action.

In some embodiments, applying the remediation action includes soliciting the user via the enpoint device to provide an input to justify the potentially noncompliant action.

In some embodiments, the method further includes: analyzing the input to determine whether the potentially noncompliant action is compliant or noncompliant; and in response to the potentially noncompliant action being determined to be compliant, stopping and/or reverting the at least one remediation action.

In some embodiments, the potentially noncompliant action includes at least one of: copying a sensitive file to a local storage; copying the sensitive file to a removable storage; retaining the sensitive file on the local storage longer than a first configurable duration; copying the sensitive data to a clipboard, sending the sensitive data via an internal communication channel; sending the sensitive data via an external communication channel; causing the sensitive data to be displayed longer than a second configurable duration; and causing a quantity of the sensitive data above a configurable quantity threshold to be displayed over a duration shorter than a third configurable duration.

In some embodiments, the remediation action includes at least one of: causing information about the potential noncompliant action to be stored; sending a report to an analyst; sending a report to a manager of the user; invoking a first API to cause a dialog box to appear on a display of the endpoint device to alert the user; invoking a second API to cause an instant message to be sent to the user; invoking a third API to cause an email message to be sent to the user; encrypting a file containing the sensitive data; moving the file to storage local to or distant from the endpoint device, and inaccessible to the user; quarantining the file; deleting the file; and locking the endpoint device.

In some embodiments, applying the at least one remediation action includes at least: moving a file containing the sensitive data to a new data asset, wherein the user has no file-system permissions over the new data asset; and create an information file, wherein the pathname of the information file is the pathname of the file containing the sensitive data before moving

According to another aspect, a system for providing data governance policy feedback to a user is provided. The system includes: a customer environment including: at least one endpoint device, a plurality of data assets accessible via the at least endpoint device, and at least one sensor configured to monitor usage of the plurality of data assets by the at least one endpoint device, the sensor including: a detection module configured to detect sensitive data from data assets accessible via the at least one endpoint device, a surveillance module configured to detect a potentially noncompliant action performed by the user on a particular device from the at least one endpoint device, and at least one remediation module configured to perform at least one remediation action in response to a potentially noncompliant action being detected by the surveillance module; and a service provider environment in communication with the at least one sensor to receive information information relating to the potentially noncompliant action and to send the at least one remediation action to be performed, the service provider environment including: an event storage module configured to store the information in the database, a memory including a set of rules implementing the data governance policy, wherein each rule defines at least a condition and a set of remediation actions, a matching module configured to match the information against the condition of each rule from the set of rules, and a remediation-determination module configured to select the at least one remediation action from the set of remediation actions of matched rule.

In some embodiments, the service provider environment further includes a level-determination module configured to quantity a noncompliance level based on at least one of: a predefined importance level of the matched rule; a frequency in which the matched rule is triggered or broken by the user; a quantity of sensitive data involved in the potentially noncompliant action; a type of sensitive data involved in the potentially noncompliant action; a combination of types of sensitive data; and a metric based on at least a behaviour of the user and a behaviour of a set of peers of the user, wherein the at least one remediation action from the set of remediation actions defined by the rule is selected based at least in part on the noncompliance level.

In some embodiments, the surveillance module is configured to detect the sensitive data by identifying a portion of text within the plurality of data assets matching a predefined pattern, wherein the sensor further includes a quantification module configured to count a number of matches of the matched pattern within a scope of the plurality of data assets to obtain a quantity of the sensitive information detected, and wherein: the condition defined by each rule is based at least in part on the quantity of the sensitive data detected; the noncompliance level is quantified based at least in part on the quantity of the sensitive data detected; and/or the at least one remediation action from the set of remediation actions defined by the rule is selected based at least in part on the quantity of the sensitive data detected.

In some embodiments, the sensor further includes a classification module configured to assign a class to the sensitive data, wherein the type of the sensitive data corresponds to the class of the sensitive data, and wherein: the condition defined by the rule is based at least in part on the class of the sensitive data; the noncompliance level is quantified based at least in part on the class of the sensitive data; and/or the at least one remediation action from the set of remediation actions defined by the rule is selected based at least in part on the class of the sensitive data.

In some embodiments, the sensor further includes an age-measuring module configured to measure an age corresponding to at least one of a time elapsed since the sensitive data was first detected and a time elapsed since the data asset was created, wherein: the condition defined by the rule is based at least in part on the age; the noncompliance level is quantified based at least in part on the age; and/or the at least one remediation action from the set of remediation actions defined by the rule is selected based at least in part on the age.

In some embodiments, the surveillance module is configured to detect at least one of: copying a sensitive file to a local storage; copying the sensitive file to a removable storage; retaining the sensitive file on the local storage longer than a first configurable duration; copying the sensitive data to a clipboard, sending the sensitive data via an internal communication channel; sending the sensitive data via an external communication channel; causing the sensitive data to be displayed longer than a second configurable duration; and causing a quantity of the sensitive data above a configurable quantity threshold to be displayed over a duration shorter than a third configurable duration.

In some embodiments, the remediation module is configured to perform at least one of: causing information about the potential noncompliant action to be stored; sending a report to an analyst; sending a report to a manager of the user; invoking a first API to cause a dialog box to appear on a display of the endpoint device to alert the user; invoking a second API to cause an instant message to be sent to the user; invoking a third API to cause an email message to be sent to the user; encrypting a file containing the sensitive data; moving the file to storage local to or distant from the endpoint device, and inaccessible to the user; quarantining the file; deleting the file; and locking the endpoint device.

According to a further aspect, a computer readable medium is provided. The computer readable medium includes computer instructions that, when executed by a processor, cause the processor to: detect sensitive data within data assets accessible by an endpoint device; detect, through a sensor, a potentially noncompliant action involving the sensitive data performed by the user at the endpoint device; match the potentially noncompliant action against a condition defined by a rule from a set of rules implementing the data governance policy; store information relating to the potentially noncompliant action, the user, and the rule; and apply at least one remediation action from a set of remediation actions defined by the rule, the at least one remediation action including a workflow-disruptive action.

### BRIEF DESCRIPTION OF THE DRAWINGS

For a better understanding of the embodiments described herein and to show more clearly how they may be carried into effect, reference will now be made, by way of example only, to the accompanying drawings which show at least one exemplary embodiment.
Figures 1A and 1B shows a schematic illustrating a system for defining a data governance policy, automatically monitoring compliance and providing feedback, according to an embodiment.
Figure 2 shows a rule visualization graphical user interface according to an embodiment of a rule-definition interface.
Figures 3A-3C show condition creation graphical user interfaces according to embodiments of the rule-definition interface.
Figures 4A-4D show action creation graphical user interfaces according to embodiments of the rule definition interface.
Figure 5 shows a flowchart illustrating a method for automatically monitoring compliance and providing feedback, according to an embodiment.

### DETAILED DESCRIPTION

It will be appreciated that, for simplicity and clarity of illustration, where considered appropriate, reference numerals may be repeated among the figures to indicate corresponding or analogous elements or steps. In addition, numerous specific details are set forth in order to provide a thorough understanding of the exemplary embodiments described herein. However, it will be understood by those of ordinary skill in the art that the embodiments described herein may be practised without these specific details. In other instances, well-known methods, procedures and components have not been described in detail so as not to obscure the embodiments described herein. Furthermore, this description is not to be considered as limiting the scope of the embodiments described herein in any way but rather as merely describing the implementation of the various embodiments described herein.

One or more systems described herein may be implemented in computer program(s) executed on processing device(s), each including at least one processor, a data storage system (including volatile and/or non-volatile memory and/or storage elements), and optionally at least one input and/or output device. "Processing devices" encompass computers, servers and/or specialized electronic devicess which receive, process and/or transmit data. As an example, "processing devices" can include processing means, such as microcontrollers, microprocessors, and/or CPUs, or be implemented on FPGAs. For example, and without limitation, a processing device may be a programmable logic unit, a mainframe computer, a server, a personal computer, a cloud based program or system, a laptop, a personal data assistant, a cellular telephone, a smartphone, a wearable device, a tablet, a video game console or a portable video game device.

Each program is preferably implemented in a high-level programming and/or scripting language, for instance an imperative e.g., procedural or object-oriented, or a declarative e.g., functional or logic, language, to communicate with a computer system. However, a program can be implemented in assembly or machine language if desired. In any case, the language may be a compiled or an interpreted language. Each such computer program is preferably stored on a storage media or a device readable by a general or special purpose programmable computer for configuring and operating the computer when the storage media or device is read by the computer to perform the procedures described herein. In some embodiments, the system may be embedded within an operating system running on the programmable computer.

Furthermore, the system, processes and methods of the described embodiments are capable of being distributed in a computer program product including a computer readable medium that bears computer-usable instructions for one or more processors. The computer-usable instructions may also be in various forms including compiled and non-compiled code.

The processor(s) are used in combination with storage medium, also referred to as "memory" or "storage means". Storage medium can store instructions, algorithms, rules and/or trading data to be processed. Storage medium encompasses volatile or non-volatile/persistent memory, such as registers, cache, RAM, flash memory, ROM, diskettes, compact disks, tapes, chips, as examples only. The type of memory is of course chosen according to the desired use, whether it should retain instructions, or temporarily store, retain or update data. Steps of the proposed method are implemented as software instructions and algorithms, stored in computer memory and executed by processors.

While there is a growing importance of protecting sensitive data, currently existing automated methods of enforcing data governance policies are inefficient and ineffective at educating employees working with sensitive data in order to increase data safety. To be efficient and effective, these methods ought to provide employees with an automatic, instantaneous and educational closed feedback loop that is triggered whenever they take actions that may be in violation of data governance policies.

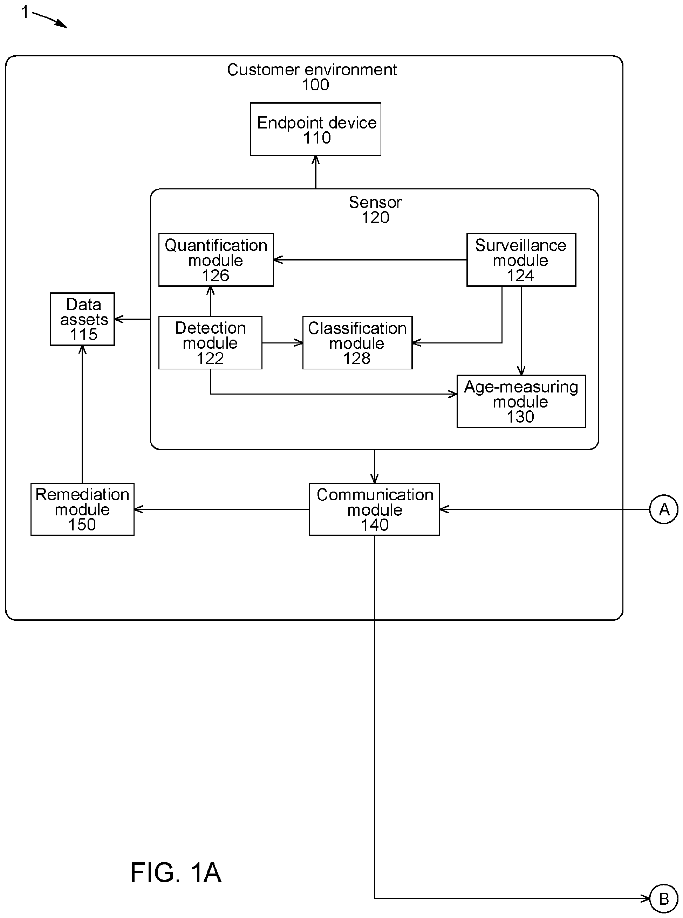

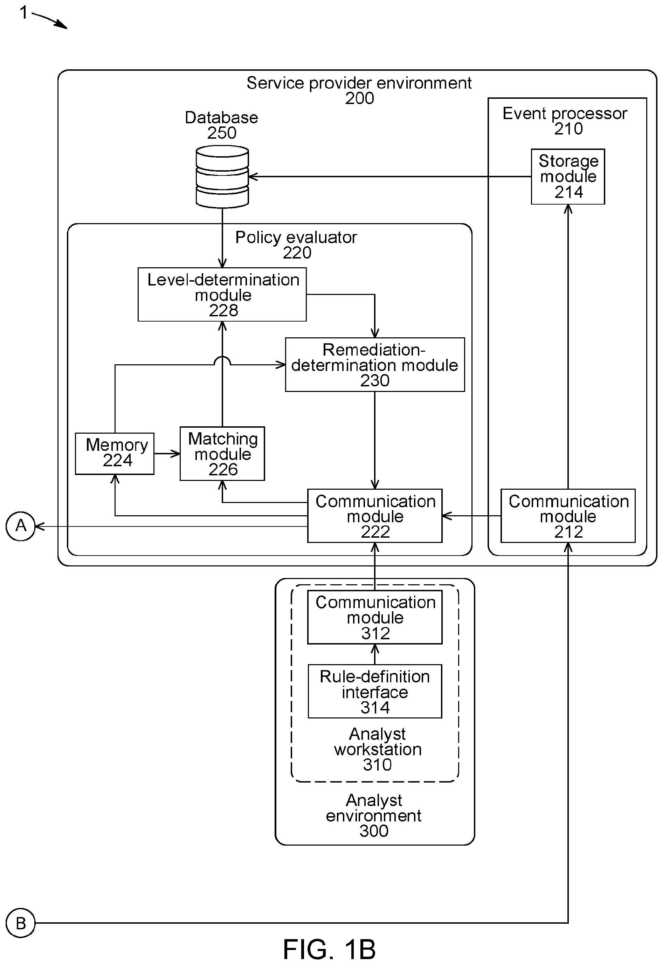

With reference to Figures 1A and 1B, an exemplary system 1 for defining a data governance policy, automatically monitoring compliance, and providing feedback, is shown. Broadly described, the system 1 is configured to monitor sources of data within a customer environment 100 for the presence of sensitive data (also referred to herein as "sensitive information") and to monitor for potentially noncompliant actions. When such sensitive data and a potentially noncompliant action are detected on and/or with respect to a data source, an event is triggered. Information about the event, including information about the sensitive data, the potentially noncompliant action, and the individual (e.g., the user or person) and endpoint device that triggered the event is sent to service provider environment 200 for analysis and storage. The event is analyzed with respect to previous events associated with the same individual and with respect to policy workflows and/or rules implementing one or more data governance policies. The policy workflows and/or rules are created in an analyst environment 300 and uploaded to the service provider environment 200.

In the following description, the customer environment 100 refers to a secured information technology (IT) environment that includes technological components controlled by a customer. Such components can include hardware and software to implement the client's IT infrastructure, such as workstations, servers, storage, networking equipment, etc. Such equipment can communicate via a single physical or virtual network, or multiple networks controlled by the client. The equipment can be located on the customer's premises, and/or can be distributed. For example, the customer environment 100 can include computing components, such as workstations, that employees can use for remote work. As another example, customer environment 100 can include hardware and/or software provided as a service to the customer, such as cloud computing solutions including for instance Microsoft 365^{™} or Google^{™} Docs, cloud storage solutions, and/or other cloud services. Although a single customer environment 100 is illustrated, it will be appreciated that the system 1 can be configured to monitor compliance with data governance policies in a plurality of customer environments controlled by a plurality of different customers.

The service provider environment 200 and analyst environment 300 refer to similar IT environments that can be respectively controlled by an organization providing data security services and by an analyst, instead of by the customer. As can be appreciated, the service provider environment 200 can include hardware and/or software components that are on the same or different physical or logical premises than hardware and/or software components of analyst environment 300 and/or of customer environment 100. As an example, the service provider environment 200 can include a backend server implementing functionalities such as those that will be described in various modules hereafter. Although the term backend server is used, it is appreciated that the backend server can correspond to a plurality of servers, each of which implements all or a subset of the functionalities of the backend server, and/or which share the processing load among themselves. As another example, the service provider environment 200 can include managed software modules running devices, such as workstations, in the customer environment 100. The analyst environment 300 can include hardware and/or software for interacting with the service provider environment 200 and/or customer environment 100. As an example, the analyst environment 300 can include an IT device, such as a workstation, equipped with a web browser configured to communicate and interoperate with service provider environment 200 and/or customer environment 100 through HTTP, HTTPS or other protocols.

In the foregoing description, various modules of the customer environment 100, service provider environment 200 and analyst environment 300 will be described. As can be appreciated, such modules can be implemented as part of one or more of the above-described hardware and/or software components within such environments 100, 200 and 300. In some embodiments, the modules can be provided as part of one or more non-transitory computer-readable media containing instructions, which executed, cause a computing hardware component to implement the functionality of the modules.

As can be appreciated, the customer environment 100 can include many different sources of data that may need to be monitored for sensitive data. Such sources of data can include, for example, storage on employee workstations, servers (including for instance network attached storage devices), virtual machines, and cloud services or resources, among others. At least some of the data sources can be monitored for instance from a customer endpoint device 110, from servers providing data, and/or by service providers providing cloud services. In the present embodiment, the customer endpoint device 110 corresponds to an employeeoperated device, such as a workstation, a laptop, a tablet, a smartphone or a personal digital assistant, used by an employee, but it is appreciated that the endpoint device can correspond to other devices within the customer environment 100, such as a server. The customer endpoint device 110 can be located on the customer's premises or can be at an employee's home or at another location while working remotely and connected to the customer's IT environment for instance via a Virtual Private Network (VPN). Although a single endpoint device 110 is illustrated, it will be appreciated that the customer environment 100 can include a plurality of endpoint devices that can be monitored for sensitive data and potentially noncompliant actions, and/or from which sensitive data and potentially noncompliant actions can be monitored.

The customer environment 100 can be provided with a sensor 120 that is configured to detect sensitive data contained within data assets 115 accessible via one or more devices in the customer environment, such as customer endpoint device 110. The sensor 120 can for instance include software that can be installed and/or executed on device 110 (for example loaded in memory and executed by a processor associated with the device 110). The sensor can also for instance include software that can be installed and/or executed on a different device within the customer environment 100, provided that this device has access to the data assets 115 that are accessible via the device 110 either from time to time or on a continuous basis. For instance, the sensor can be installed on a server operated by the customer making data assets 115 accessible within the environment 100, and/or on a server operated by a cloud services provider. In both cases, the software can be controlled and/or maintained by the service provider. The sensor 120 can also for instance be implemented as a hardware device located inside or outside the device 110. As can be appreciated, the sensor 120 can include a plurality of software or hardware modules that are configured to detect sensitive data contained within data assets 115 accessible via the device 110. It can be appreciated that although the word "sensor" is used in the singular, in some embodiments, the word "sensor" can refer to a plurality of sensors operating together to provide detection of sensitive data accessible through one or more endpoint devices 110 and/or potentially noncompliant actions taken through one or more endpoint devices 110.

The sensor 120 can include a detection module 122 that is configured to monitor data assets 115. As can be appreciated, data assets 115 can correspond to any type of digital data capable of being interpreted by and/or stored on a computer system. For example, data assets can include files (such as pictures, videos, text files, log files, documents, source code, etc.), databases (including database structures and records stored therein), and streams (including audio, video, or any other type of data stream such as channel, event logs, and log streams), among others. The detection module 122 can be configured to monitor data assets 115 stored locally on the device 110 and/or external data assets 115 accessible via the device 110, such as a network, a cloud drive or a removable storage device, including for instance an optical, magnetic or solid-state storage media, such as a CD-ROM, a DVD, a diskette, a cassette, an external magnetic or solid-state hard drive, a memory card, a flash drive, a mobile phone, a PDA, a digital audio player, a digital camera, etc. The detection module 122 can scan data assets 115 in order to identify and track data of interest contained therein, such as a notable section of a data asset 115 or individual data element contained within data asset 115. As can be appreciated, one or more portions of data assets 115 can be considered as being of interest based on a configurable set of policy workflows and/or rules, such as if the one or more portions contain a specified type of information and/or match a defined pattern or structure. A detection event can occur when information of interest is detected within a data asset, such as when information contained within the data asset is determined to contain the specified type of information and/or match the defined pattern or structure.

In the present embodiment, the data of interest tracked by detection module 122 relates to sensitive client information and is thus referred to as sensitive data. Such sensitive data can include, for example, personal information such as social security numbers, credit card numbers, driver's license number, telephone numbers, passport numbers, etc. Additional, customer or user specific sensitive data can be detected and tracked, including for instance customer-specific employee numbers or project identifiers. As can be appreciated, sensitive data can exist as sequences of characters or strings having a particular format. Accordingly, sensitive data can be identified by detection module 122 using regular expressions and/or other text-based pattern recognition techniques. In the context of the present specification, "regular expression" is understood to include grammars used to recognize regular languages as well as regular expression-like formalisms and languages such as regexes or rational expressions that can be used to recognize non-regular, e.g., context-sensitive languages, such as defined in standards such as POSIX^{™} and/or programming languages or libraries such as PCRE. In some embodiments, the regular expressions and patterns can be supplemented with context-sensitive qualifiers. In some cases, sensitive data can be contained within data assets 115 corresponding to text-based files (i.e., files of any format containing at least some binary data corresponding to encoded characters), and the detection module 122 can scan the binary data contained within the file to look for sensitive data. In other cases, the detection module 122 can process data assets 115 to extract data therefrom and identify sensitive data in the extracted data. By way of example, if a data asset corresponds to an image or a video, detection module 122 can apply optical character recognition (OCR) to identify text data contained therein, and then identify sensitive data contained in said text. As another example, if a data asset corresponds to an audio file, detection module 122 can apply voice recognition to convert spoken phrases to text data, and then identify sensitive data contained therein. As a further example, if a data asset corresponds to a video file, detection module 122 can apply both OCR and voice recognition to identify sensitive data contained therein.

Although the sensitive data described above typically exists in the form of text, it is appreciated that in some embodiments, sensitive data can exist in other forms. For example, in some embodiments, sensitive data can correspond to a portion of an image or video, such as a face or other identifiable personal information. Accordingly, detection module 122 can be configured to use other suitable pattern recognition techniques, such as facial recognition and/or artificial intelligence or machine learning approaches, e.g., trained neural networks such as convolutional neural networks, to identify sensitive data.

The sensor 120 can include a surveillance module 124 that is configured to monitor actions taken by a user of a device 110 in relation with sensitive data detected in its data assets 115. The monitored actions can correspond to actions that may be noncompliant with a data governance policy or be indicative of a noncompliance possibly occurring. A variety of types of actions can be monitored by the surveillance module 124, including for instance filesystem-related actions, clipboard-related actions, application-related actions and display-related actions.

Monitoring filesystem-related actions can include monitoring the creation of new data assets such as files containing sensitive data, for instance by copying remotely-held data assets to a local storage of the endpoint device 110 and/or to a removable storage accessible from endpoint device 110, and/or retaining such data assets in a local storage for a period of time that is above a duration threshold defined by a data governance policy.

Monitoring clipboard-related actions can include monitoring the data stored in one or more clipboards of the endpoint device 110, e.g., encompassing clipboards, pasteboards, cut-buffers, selections, clips or other types of memory buffers provided, for instance by operating systems such as Microsoft^{™} Windows^{™}, macOS^{™}, iOS or Android^{™} and/or applications such as the X Window System or Wayland, that can be used to store data temporarily, for instance to enable "copying" and "pasting," in order for the detection module 222 to assess that sensitive data has been stored in a clipboard, for instance in textual form or as a screen capture, or screenshot, indicating a potential for noncompliance.

Monitoring application-related actions can include monitoring actions taken by a user of an endpoint device 110 through an application running on the device, such as a web browser, an email client or an instant messaging application. As an example, the surveillance module 124 can monitor contents entered into graphical widgets of such applications for the detection module 122 to detect whether sensitive data is present therein before the application is able to send the contents, e.g., through a network connection.

Monitoring display-related actions can include monitoring contents displayed, e.g., in a window of an application visible on a monitor connected to endpoint device 110, for the detection module 122 to detect whether sensitive data is being displayed. As an example, detecting that sensitive information is being displayed on a monitor with no apparent activity for longer than a certain configurable duration can indicate that an individual is potentially capturing images of the monitor using an external device such as a camera and/or that the endpoint device 110 user has left the device unattended while the monitor is displaying sensitive information that can be visible to other individuals. Similarly, detecting that a quantity of sensitive data above a certain configurable quantity threshold is being displayed over a duration below a configurable duration threshold can indicate that an individual is potentially browsing through a large volume of data while capturing images of the monitor using an external device.

In some embodiments, the surveillance module 124 can be configured to monitor cloud data assets, including but not limited to assets associated with Microsoft 365^{™} cloud data sources such as OneDrive^{™}, Outlook^{™}, Teams^{™}, Sharepoint^{™}, etc., to identify potentially noncompliant actions.

The sensor 120 can include a quantification module 126 that is configured, upon an event being triggered by the detection module 122 detecting sensitive data and the surveillance module 124 detecting a potentially noncompliant action taken with respect to the detected sensitive data, to obtain a quantity of sensitive data affected. As an example, in embodiments where a detection event occurs when the detection module 122 detects one or more matches of a defined pattern or structure corresponding to sensitive data in a data asset, the quantity of sensitive data can correspond to the number of matches of the pattern or structure in the data asset. In some embodiments, the quantity of sensitive data can be measured at more than one level of granularity of data assets. As an example, when sensitive data is detected in a file, the quantity of sensitive data can be measured in the file, in all files in the same directory as the file, in all files in the same directory and in subdirectories thereof (optionally up to a configurable level of recursion), in all files in the same filesystem as the file, and/or in all files on the same storage device as the file. In some embodiments, the quantification module 126 can further quantify a confidence level corresponding to a likelihood that the event was in fact triggered by detected data that is genuinely sensitive (as opposed to the detection event being a false positive). The confidence level can be calculated using any suitable means, for example based on the context of the detected sensitive data and/or the quantity of matches. The calculated confidence can be presented as a percentage, or as a decimal within a normalized ranged such as between 0 and 1, with 0 being the least confident and 1 being the most confident.

The sensor 120 can include a classification module 128 that is configured, upon an event being triggered by the detection module 122 detecting sensitive data and the surveillance module 124 detecting a potentially noncompliant action taken with respect to the detected sensitive data, to assign a type or class to the sensitive data affected. In embodiments where a detection event occurs when the detection module 122 detects one or more matches of a defined pattern or structure corresponding to sensitive data in a data asset, the class of sensitive data can be indicated by the specific pattern or structure that matched in the data asset. As an example, a set of patterns used to detect sensitive data could include a regex "\\d{3}-\\d{2}-\\d{4}" which is known to be used to detect United States social security numbers, and therefore sensitive data matched by this regex could be classisied as social security number. As further examples, the classification module 128 can assign to the sensitive data a class corresponding to one or more of credit card number, driver's license number, telephone number, passport number, etc., or a customer-defined or user-defined class, depending on the specific pattern or structure that was matched. In some embodiments, classification module 128 can additionally or alternatively implement machine learning and use a classifier model trained on instances of sensitive data labelled with a class to classify sensitive data.

The sensor 120 can include an age-measuring module 130 that is configured, upon an event being triggered by the detection module 122 detecting sensitive data and the surveillance module 124 detecting a potentially noncompliant action taken with respect to the detected sensitive data, to measure an age of the sensitive data or data asset affected. The age of the sensitive data can for instance correspond to the time elapsed since the specific sensitive data was first detected by the detection module 122 in any data asset 115 accessible to endpoint device 110 or to the time elapsed since the sensitive data was first detected in the specific data asset. It can be appreciated that the sensitive data may have been present in a data asset 115 before the sensor 120 was installed on the device 110 and have been detected in an initial scan by the detection module 122. In such a case, obtaining an exact age of the sensitive information may not be possible, and a measure of the time elapsed since the initial scan was completed may be used instead. The age of the data asset can correspond to the time elapsed since a specific action occurred with respect to the data asset. As an example, if the data asset corresponds to a file, metadata stored in the filesystem associated with the file can include a file creation timestamp, a file modification timestamp and/or a file access timestamp, any combination of which can be used to compute the data asset age. The age associated with the event can include either or both of the sensitive data age and the data asset age.

The customer environment device 100 can also be provided with a communication module 140 that can be used by endpoint device 110 and/or sensor 120 to communicate with corresponding communication modules 212, 222 of the event processor 210 and policy evaluator 220 of the service provider environment 200 for transmitting information relating to potential noncompliance events and for receiving information relating to remediation events. The communication module 140 can be configured to receive event information such as quantity of sensitive information, class of sensitive information and/or age from one or more of modules of the sensor. The communication module 140 prepares a payload for transmission to the communication module 212 of the service provider environment 200 through a communication link. For instance, the communication module 140 can prepare a number of packets for transmission over a TCP/IP network such as the Internet or, if the customer environment 100 and the service provider environment 200 are not distant or are otherwise located on the same physical network, a local area network including wired and/or wireless links. In some embodiments, the transmission between communication modules 140, 212, 222 and 312 operates through a cryptographic protocol such as the Secure Sockets Layer (SSL) or the Transport Layer Security (TLS). It can be appreciated that, in embodiments where the event processor and/or the policy evaluator correspond to applications being executed on the endpoint device 110, the communication link can for instance correspond to an interprocess communication mechanism implemented by the operating system and/or an application of the device 110, such as sockets, pipes, message queues, buses or shared memory.

The customer environment 100 can further be provided with a remediation module 150, which can operate at an endpoint device 110 or reside elsewhere in the customer environment 100, or which can include anumber of components, some operating at an endpoint device 110 and some operating outside of it. The remediation module 150 is configured to receive, from the policy evaluator 220 and via the communication module 140, a remediation event including an indication of one or more remediation action(s) to be performed, e.g., by endpoint device 110 in response to a noncompliance event, and to perform said remediation action(s). Remediation actions are designed to invite the user of device 110 to remedy a noncompliant action and/or to raise awareness of the data governance policy infringed. A remediation action can be taken in real-time or in near real-time, i.e., as soon after the noncompliant action as processing by the endpoint device 110, event processor 210, policy evaluator 220 and communication between these modules will allow, in order to boost the educative value of the remediation action.

Remediation actions can be workflow-disruptive actions, i.e., actions that disrupt the workflow of the endpoint device 110 user. The various possible remediation actions can be more or less disruptive, i.e., they possess a different disruptiveness level. In some embodiments, the data governance policies can be implemented in system 1 to create a gradation of sanctions system, i.e., in such a way that the disruptiveness level of remediation actions increases as the noncompliance level increases, with the noncompliance level corresponding to a frequency measure of noncompliance for a given individual and a given policy, for instance, the number of times the given policy was infringed by the same given individual. This creates a spectrum of intervention, wherein, as an example only, a first noncompliant action involving a file can result in mere data collection, a second similar noncompliant action can result in a warning popup, a third similar noncompliant action can result in the file being quarantined, and a fourth similar noncompliant action can result in the file being deleted. In some embodiments, other factors can affect the quantification of the noncompliance level, such that for instance noncompliant actions that carry a higher degree of risk can be quantified as having a higher noncompliance level. Additional factors that can be taken into account to determine the noncompliance level include for instance include a counted number of sensitive data detected as part of the noncompliant action, a predefined importance attached to a data policy rule, a frequency in which a specific rule, a subset of rules or the policy is broken by the user, a specific type or class of sensitive data involved in the non compliant action, and/or a combination of types or classes of sensitive data involved in the non compliant action, reflecting as an example the fact that a credit number on its own is not as sensitive as a combination of a credit card, a name and an address. In some embodiments, a comparison of the behaviour of a user performing a potentially noncompliant action with the behaviour of other users in the same customer environment 100 can factor in the determination of a noncompliance level. For instance, the behaviour of the user can be compared with the behaviour of a set of their peers, for instance other users working in the same department or team, or performing similar functions for the customer. The comparison can be based on any suitable factor(s), for instance some or all of the factors used to the determine noncompliance level. As an example only, a statistical metric such as a Z-score can be computed with respect to a numerical factor such as the number of sensitive data detected as part of a noncompliant action performed by a user compared of the average number of sensitive data detected as part of similar noncompliant actions performed by the user's peers can factor in the determination of the noncompliance level and, therefore, the disruptiveness of the remediation action.

As an example, at one end of the spectrum, a remediation action with a low disruptiveness level can correspond to interrupting the workflow of a user by causing a dialog box to open on a monitor of the endpoint device of the user, for instance forcing the user to read a message about the policy that was infringed, clicking a checkbox indicating that they understand, clicking a button of the dialog box, and/or allowing or forcing the user to provide a reason/justification for infringing the policy, before they can resume their workflow. As can be appreciated, the user can provide the reason for infringing the policy by typing a corresponding explanation into a text field as part of the dialogue and/or via other input mechanisms (e.g., by recording a voice note or video note). The provided reason can be transmitted as part of the event information, and recorded in a database for review during subsequent audits. As another example, at the other end of the spectrum, a remediation action with a high disruptiveness level can correspond to interrupting the workflow of a user by causing the endpoint device of the user to enter a locked state, such that the user is incapable of resuming their workflow. A remediation action can also possess a null disruptiveness level. As an example, a remediation action can simply consist in storing the information about the noncompliance event in a database for consultation, for statistical purposes and/or to allow for ulterior gradation of sanctions, and/or sending a report to an analyst and/or to a manager, without causing any disruption and/or without alerting the user at all.

Other possible remediation actions can include sending an email to the user, encrypting a data asset containing sensitive information, replacing each sensitive information in a data asset with a cryptographic token, and/or moving the data asset, e.g., the file, to a local or distant storage, for instance a storage that is inaccessible to the user, such as a secured vault of the customer environment 100, a secure folder on the customer endpoint device 110, or deleting the data asset, e.g., the file. In some embodiments, remediation actions can be provided through integration with third-party platforms or APIs, e.g. the Twilio^{™} API, the Microsoft^{™} Bot Framework SDK or the Slack^{™} API, for instance to send a text message such as an SMS message, to send an instant message such as a Microsoft Teams^{™} message or a Slack^{™} message and/or open a ticket in a ticketing system. In such cases, the remediation action can further include prompting a user to indicate that they understand, for instance by using a suitable reaction when this feature is available, and/or to provide a justification through the same channel. In some embodiments, quarantining a file containing sensitive data can be provided as a possible remediation action. This remediation action can be referred to as a "tombstone" action. A tombstone action can include moving the file to a storage location which is inaccessible to the user, and creating a new file having the same path as the moved file, which contains information regarding for instance the policy that was infringed and a means for the user to provide a justification and/or resume their workflow, including for instance an email address the user can write to and/or a telephone number the user can call.

In some embodiments, mechanisms allowing or forcing a user to provide a justification for a potentially noncompliant action can be leveraged to determine whether a potentially noncompliant action is truly noncompliant or is actually compliant. Any suitable method of making this determination can be used, for instance relying on the intervention of a manager or an analyst to indicate whether the action is compliant or not, and/or relying on a trained model, including for instance a classifier taking the justification as input and providing a predicted probability of the action being compliant and/or noncompliant as an output, or a large language model taking an input such as the concatenation of the justification, a description of the noncompliant action in a suitable format and the relevant data governance policy in a suitable format., e.g., a vector embedding corresponding to the output of an encoder using the description and/or policy as input. The remediation module 150 can be configured to stop and/or revert the remediation action once a determination has been made that the potentially noncompliant action is actually compliant, or probably compliant per a configurable compliance probability thereshold.

Remediation actions can be awareness-increasing actions, i.e., actions that are designed to ensure that the endpoint device 110 user is aware of the data governance policy they are infringing and of how their usage of sensitive data causes an infringement. Therefore, some or all remediation actions can include a means of informing the user of the nature of the noncompliant action that was detected, the nature of the remediation action that was taken, and/or the details of the data governance policy rule that was infringed. Some or all remediation actions can include forcing the user to resolve the issue by discontinuing the detected noncompliant activity and/or allowing the user to continue the noncompliant activity and providing a justification for not complying. In embodiments where users are allowed to continue noncompliant activity, manual intervention, e.g. by a manager and/or a security analyst, can be necessary to terminate some or all disruptive remediation actions.

The service provider environment 200 can include an event processor 210 for receiving and dispatching event information, a policy evaluator 220 for verifying whether the event information corresponds to a genuine noncompliance event and select remediation action(s) and a database 250 for storing information about past events. In the illustrated embodiment, the event processor 210, policy evaluator 220 and database 250 are provided as part of one or more servers controlled by the service provider. It is appreciated, however, that other configurations are possible. For example, in some embodiments, at least some modules of the event processor 210 and/or policy evaluator 220 can be provided as a managed software module running on endpoint device 110.

The event processor 210 can be provided with a communication module 212 for receiving event information from the customer environment 100 and for forwarding the same to the policy evaluator 220. The configuration options of communication module 212 are similar to the configuration options of communication module 140, and communication module 212 can be configured in the same or in a different way as communication module 140. It is appreciated that communication module 212 can implement more than one means of communication. As an example only, communication module 212 can be configured to communicate with the communication module 140 of a customer endpoint device using TCP/IP over a network link and to communicate with the communication module 222 of the policy evaluator using interprocess communication over a system bus.

The event processor 210 can be provided with a storage module 214 for storing event information received from the customer environment 100 by the communication module 212, e.g., in a database 250. The information stored, e.g., in the database 250, can be used for statistics, reporting and analysis/audit purposes, and can be queried by the policy evaluator 220 to determine whether a potential noncompliance event corresponds to an actual noncompliance, and to determine the noncompliance level associated therewith. It can be appreciated that at the event processor 210 level, the quantity information extracted at the sensor 120 level by the quantification module 126 can be extended to different levels of granularity, for instance by the storage module 214. As an example, the quantification module 126 may be limited to counting occurrences of detected sensitive data to the local filesystem or equivalent file storage construct. However, once the information is received at the service provider environment 200, the quantification can extend at the user-level across all of their data sources, e.g., if a user has access to two laptops, and multiple OneDrive and Outlook accounts. It is therefore possible by the storage module 224 to determine how much sensitive data a user has in total across all of their data sources. This quantification can extend to a departmental level, e.g., to identify which departments has the most data, or presents the highest risk level. Users belonging to the same department can also be compared one against another to identify outliers, i.e., users that accumulate and/or manipulate data in a comparatively more suspect manner. The quantification can also extend to different levels, all the way to the organizational level, e.g., encompassing the whole customer environment 100, where an overall risk level can be assessed and quantity of sensitive data can be quantified, e.g. by type and/or other filters. Finally, at all quantification levels the system has the ability to track the propagation of sensitive data across data sources, users, and departments to paint an accurate picture of the risk and how it evolves over time as sensitive data moves within the customer environment 100.

The database 250 can for instance be implemented using a graph database such as an RDF store or a labelled property graph that can be manipulated or searched using a query language such as SPARQL or Cypher, or using a relational database management system (RDBMS) that can be manipulated or searched using a query language such as SQL. In some embodiments, the database 250 can be configured with an optimized structure to increase the performance of the storage module, event processor 210, and policy evaluator 220, and/or to model complex relationships between detected sensitive data, potentially noncompliant actions, and users in the customer environment 100.

The policy evaluator 220 can be provided with a communication module 222 for receiving noncompliance event information from the event processor 210 for processing, for receiving policy workflows and/or rules from the analyst environment 300, and for transmitting remediation events to endpoint devices 110 of the customer environment 100. The configuration options of communication module 222 are similar to the configuration options of communication modules 140 and 212, and communication module 222 can be configured in the same or in a different way as communication modules 140 and 212. It is appreciated that communication module 222 can implement more than one means of communication. As an example only, communication module 222 can be configured to communicate with the communication module 140 of a customer endpoint device 110 and the communication module 312 of an analyst workstation 310 using TCP/IP over a network link and to communicate with the communication module 212 of the event processor using interprocessing communication over a system bus.

The policy evaluator 220 can be provided with a memory 224 for storing policy workflows and/or rules received from the analyst environment 300 by the communication module 222, in such a way as to optimize access to the rules by other modules of the policy evaluator 220. As an example, memory 224 can store an associative array through which each class of sensitive data points to an array of data structures corresponding to a policy rule concerning the corresponding class of sensitive data, and each data structure corresponding to a rule can include an array of data structures corresponding to conditions and point to an associative array through which each noncompliance level points to a data structure corresponding to one or more remediation action(s). In some embodiments, policy workflows can be stored along with event detection data in database 250, in which case memory 224 corresponds to database 250. While rules and/or policy workflows can be used to connote different formal means of representing data governance policy rules, e.g. a relatively more data structure-driven means and a relatively more graph-driven means respectively, it ought to be appreciated that, in the present specification, the expressions "rule" and "policy workflow" are used indifferently and as synonyms.

The policy evaluator 220 can be provided with a matching module 226 configured to verify whether a potential noncompliance event corresponds to a policy rule stored in memory 224 based on event information received by the communication module 222, and if so, select a policy rule of which the conditions are met by the event. As an example, in embodiments where database 250 is a graph database and where memory 224 corresponds to database 250, inserting event data in the database 250 causes its data model to change. Matching module 226 can therefore analyze the data model of the database 250 on an ongoing basis to detect any pattern that would trigger a policy workflow, the database reflecting the state of the customer environment 100 using graph database technology.

The policy evaluator 220 can be provided with a level-determination module 228 configured to access, in response to the matching module 226 determining that a user has infringed a policy rule, past event information stored in the database 250 associated with the user and the policy rule in order to determine a noncompliance level associated with the noncompliance event.

The policy evaluator 220 can be provided with a remediation-determination module 230 configured to determine a remediation event to be sent back to the endpoint device 110 of the infringing user through the communication module 222, based on the policy rule stored in memory 224 matched by the matching module 226 and on the noncompliance level determined by the level-determination module 228.

In the present embodiment, the communication module 222 implements an interface allowing authorized parties to define, access and modify policy rules stored in memory 224. The interface can correspond to any suitable interface and/or service that enables communication with the analyst environment 300. In the present embodiment, the communication module 222 includes a web console and/or web server, although it is appreciated that other server types are possible. The web server is configured to serve web content for a a corresponding client application, such as a browser, to run a web application including a graphical user interface (GUI) for displaying detection event information. The web server can also be configured to serve assets to populate the GUI, including existing policy rules stored in memory 224. As can be appreciated, various security protocols can be implemented to ensure that the communication module 222 only provides access to authorized parties. For example, the web server can be configured to only serve content to authorized clients and/or can only be accessible from clients on the same physical or virtual network.

By way of example, the device communicating with the policy evaluator 220 (i.e. via communication module 222) can correspond to an analyst workstation 310 that is part of analyst environment 300 (i.e. via communication module 312). The analyst workstation 310 can correspond to any computing device operable by an analyst, and can include a desktop computer, laptop computer, tablet, smartphone, etc. In the present embodiment, the analyst workstation 310 includes a communication module 312 that acts as a client for communicating with the web server implemented via the policy evaluator communication module 222. The communication module 312 can, for example, include a web browser application configured to receive web content and corresponding assets, and to run a corresponding web application that generates a GUI for display on a corresponding display device in a rule-definition interface 314 of the analyst workstation 310. It is appreciated that the communication module 312 can include other clients, such as a native application for communicating with the communication module 222 and receiving and displaying data. The communication module 312 can be configured to communicate with communication module 222 via any suitable secure and/or encrypted protocol, such as HTTPS. In some embodiments, communication module 222 can be configured to serve content only to authorized persons, devices or locations, for instance using IP-whitelisting to prevent connections from unknown or unauthorized IP addresses.

As can be appreciated, the rule-definition interface 314 can be configured to generate the GUI in the form of a web page consisting of code in one or more computer languages, such as HTML, XML, CSS, JavaScript and ECMAScript. In some embodiments, the GUI can be generated programmatically, for instance on a server hosting the policy evaluator 220, and rendered by an application such as a web browser on a user device, such as an analyst workstation 310. In other embodiments, the rule-definition interface 314 can be configured to generate the GUI via a native application running on the user device, for example including graphical widgets configured to render information received from the policy evaluator 220.

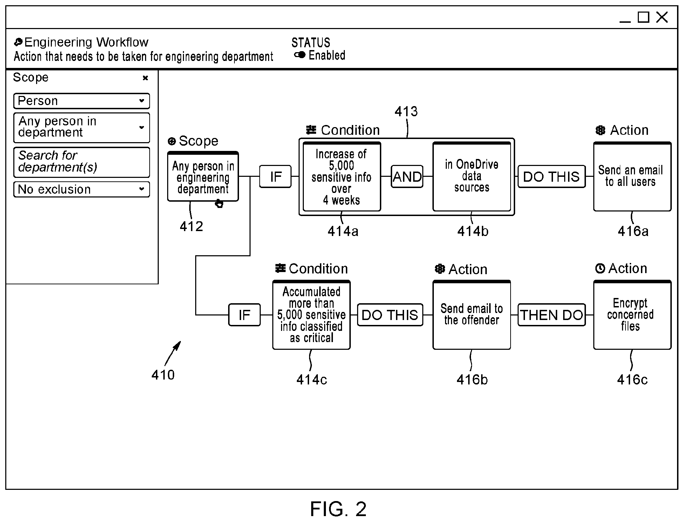

With reference to Figure 2, the rule-definition interface 314 can provide a rule visualization GUI 41 0. A rule can be applied within a configurable scope 412, such that the rule only applies within a specified dimension. In the present exemplary embodiment, the scope is configurable at a user level or dimension (also referred to interchangeably as the "person" level), such that the rule can apply to all users, a specific subset of users, for instance one specific user or all the users of a specified department (such as any user that is part of the engineering department, as shown). It is appreciated, however, that scopes can apply to other levels or dimensions. For example, in some embodiments, the scope can be defined as applying to other levels/dimensions, such as at the file level, the info level (e.g. a specified type or family of sensitive information), etc.

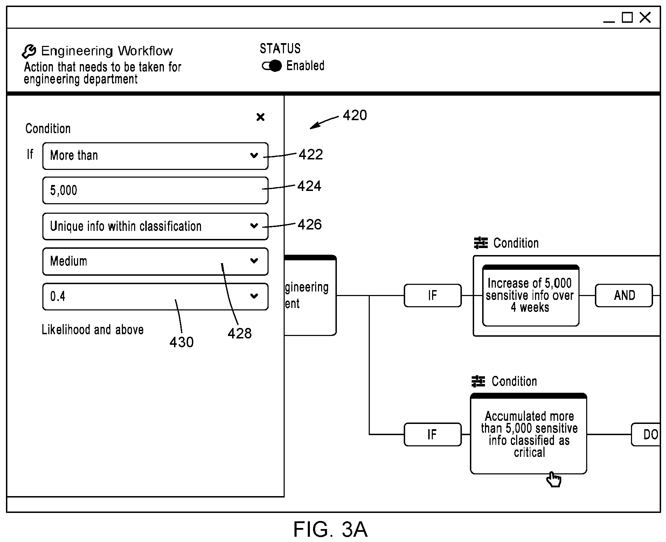

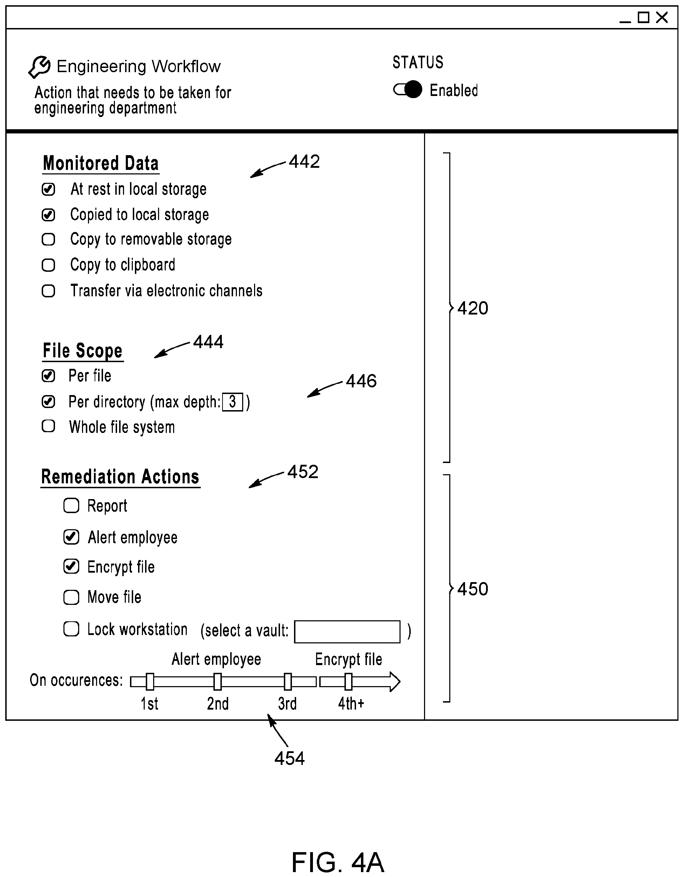

In the illustrated embodiment, a rule corresponds to a conditional statement and includes one or more conditions 414a-c, each of which can be evaluated booleanly by the matching module 226 of the policy evaluator 220 based on noncompliance event information to either "true" or "false" and one or more corresponding consequents 416a-c, each corresponding to a remediation action. The display of each condition 414a-c can include a button that, when activated by an analyst using the rule-definition interface 314, triggers the creation of a condition creation GUI such as the one illustrated in Figure 3A, described below. A condition can compositionally include a plurality of atomic subconditions connected with binary logical operators, e.g. "and" and "or", and/or unary logical operators, e.g., "not", as illustrated by the conjunction of 414a and 414b, such that each atomic subcondition can be evaluated booleanly by the matching module 226 based on noncompliance event information and that the compositional condition 413 can be booleanly evaluated, e.g., using the truth value of each subcondition and truth tables associated with each logical operator. When a condition in a rule is evaluated as true by the matching module 226, the corresponding consequent 116a-c is used by the remediation-determination module 230 to create a remediation event to be executed by the remediation module 150. A consequent can sequentially include a plurality of subconsequents, as illustrated by the sequence of 116b and 116c, such that the remediation-determination module 230 can create a remediation event corresponding to a sequence of remediation actions. The display of each consequent 416a-c can include a button that, when activated by an analyst using the rule-definition interface 314, triggers the creation of an action configuration GUI such as the one illustrated in Figures 4A-4D, described below.

With reference to Figure 3A, the rule-definition interface 314 can provide a condition creation GUI 420. As an example, a condition can be concerned with the quantity, class, age and/or location of the sensitive data detected in a data asset of an endpoint device 110. Graphical widgets can be provided to specify the condition type, and the sensitive data types as well as quantity and age limits considered by a policy rule, if applicable. For instance, a dropdown menu 422 can be used to select the type of condition. In the illustrated embodiment, the type of condition selected is "more than", corresponding to a condition that more than a specified threshold of sensitive data is detected at any given moment. It is appreciated, however, that in other embodiments, the condition can be associated with different equality or inequality relationships, e.g., "less than" or "equal to".

With the condition type "more than" selected, a text box 424 (or other suitable input) can be provided to specify the threshold number of detected sensitive data. A second dropdown menu 426 can allow specifying a scope of sensitive data that will be counted when determining whether the specified threshold has been met.

In the illustrated embodiment, the selected scope is "unique info within classification", indicating that only unique instances of detected sensitive data belonging to a specified class (or classes) are counted. The classes of sensitive data contemplated by the rule can for instance be selected from a dropdown menu 428, or other suitable input, such as a set of checkboxes. In the present embodiment, only detected sensitive data classified as "Medium" (i.e., a user-defined class corresponding to sensitive data having a medium risk) is counted. It is appreciated that other scopes of sensitive data can be selected. For example, a scope "distinct sensitive info count" can be selected to count all instances of unique or distinct sensitive data detected without limiting to a particular class. As another example, a scope "sensitive information" can be selected to count only instances of detected sensitive data corresponding to a specified type (or types) of sensitive data (such as a credit card number, bank account number, social insurance number, passport number, etc.). The type or types of sensitive data contemplated by the rule can be selected from a dropdown menu, or other suitable input such as a set of checkboxes.

A minimal confidence can be set using a text box or dropdown 430 to control the risk of counting false positives when determining when the threshold is met, i.e., counting a compliant event as noncompliant. In the present embodiment, the minimal confidence is set as 0.4, such that only detection events having a confidence level equal to or above 0.4 are counted. It is appreciated, however, that other configurations are possible, and that the defined level of confidence can apply to any statistical measure, e.g., the mean, the median, the minimum or the maximum, of the likelihood that each detected sensitive data is genuinely sensitive.

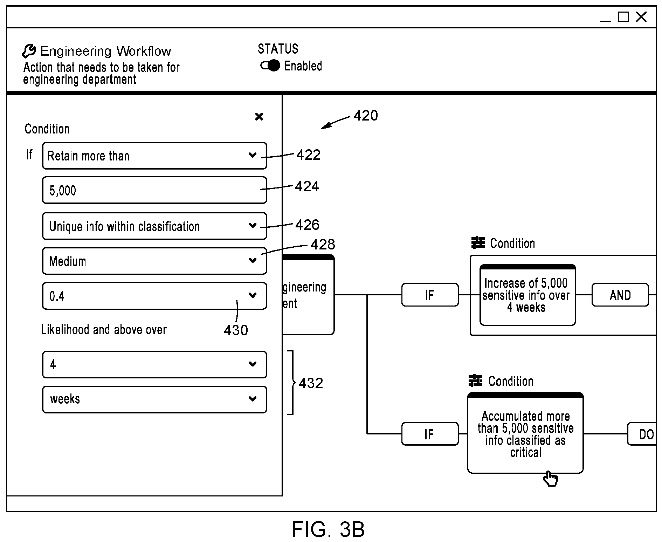

Although the condition type "more than" was described, it is appreciated that the condition creation GUI 420 can allow specifying other parameters relevant to other condition types. For example, another selectable condition type can be "retain more than" corresponding to a condition that more than a specified threshold of sensitive data is detected as being retained for more than a specified period of time. As shown in Figure 3B, with the condition type "retain more than" selected, age cutoffs can be set for instance with dropdown menus 432. In the illustrated embodiment, an age cutoff of 4 weeks is selected, such that only sensitive data detected as having been retained for more than 4 weeks is counted when determining whether the threshold is met.

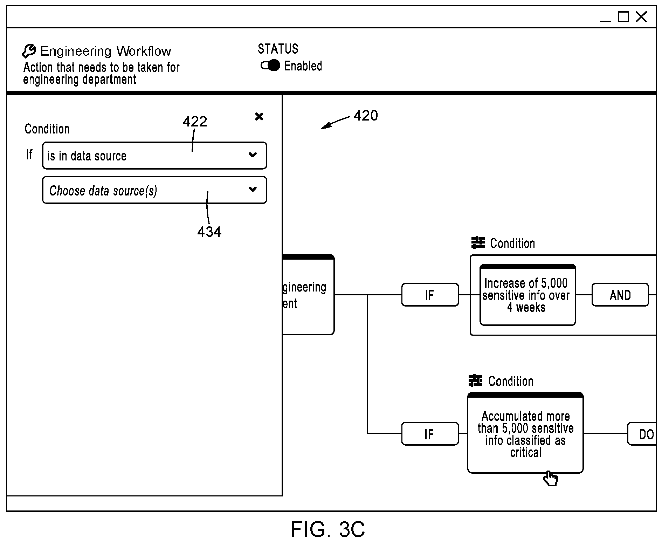

As another example, another selectable condition type of can be "is in data source", corresponding to a condition that the sensitive data is detected within one or more specified data sources. As shown in Figure 3C, with the condition 422 "is in data source" selected, the data sources can be specified via a dropdown menu 434 or checkboxes. For instance, the data source "OneDrive" can be selected, such that only sensitive data detected on a OneDrive data source is counted.

Although not illustrated, it can be appreciated that other types of conditions based on information transmitted with a noncompliance event can be created. As an example, a condition can target the user associated with an event, for instance to create a rule that targets only a specific user or group of users and/or exclude a specific user or group of users. A button to create additional conditions can be provided in order to create a condition compositionally including a plurality of atomic subconditions connected with binary logical operators. For example, as shown in Figure 2, a condition 413 is defined by the composition of two atomic subconditions 414a and 414b, such that condition 413 is triggered only when there is an increase of 5,000 sensitive data over 4 weeks detected in a OneDrive data source.

With reference to Figure 4A, condition creation GUI 420 can further include inputs 442 allowing to define the types of potentially noncompliant actions contemplated by the condition, and inputs 444 allowing selecting a data asset scope for the quantification module 126 to count occurrences of sensitive data, specifying with a text box 446 the maximum depth for recursive directory traversal.

The rule-definition interface 314 can also provide an action creation GUI 450 to select remediation actions to perform following a condition being met. Inputs 452 can be provided for selecting an action type, such as report, alert employee, encrypt file, move file to a specified vault, lock workstation, etc. A further graphical widget 454 can be provided to associate a remediation action to each noncompliance level as determined by the level-determination module 228. For example, in the illustrated embodiment, upon the action being triggered for the first three times, the employee can be notified. Upon the action being triggered a fourth time or more, the file containing the sensitive data can be encrypted.

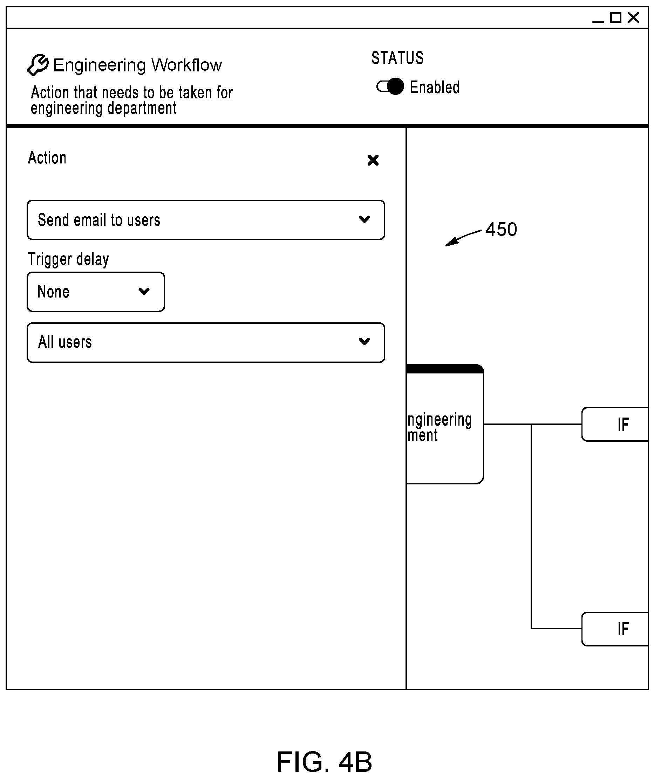

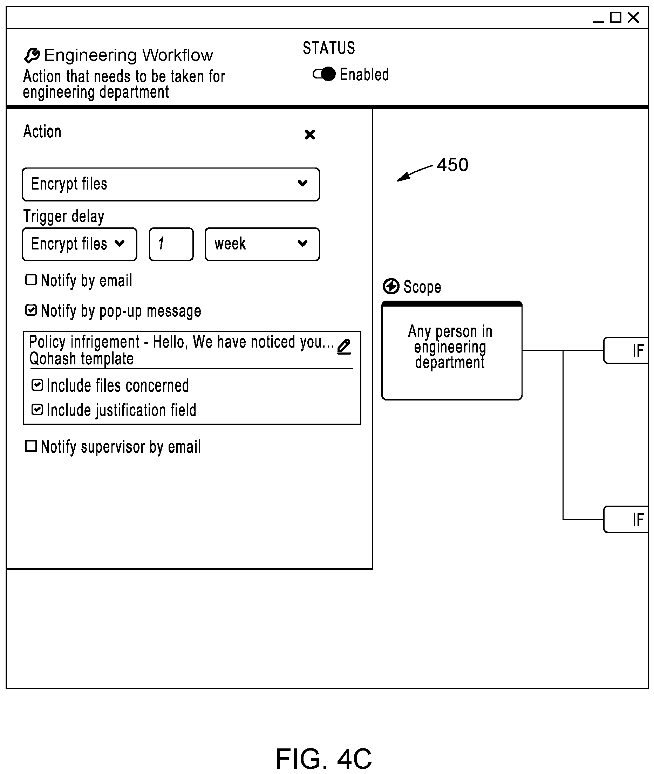

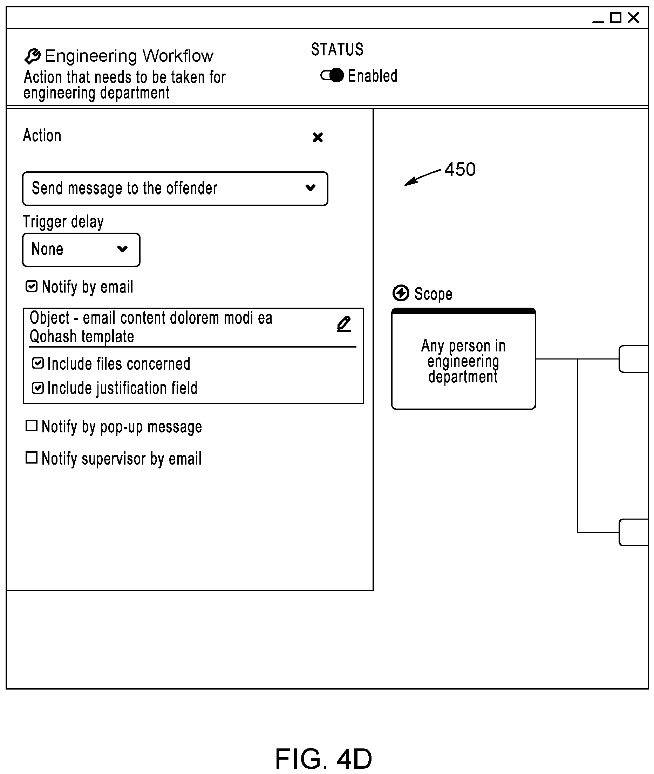

Further examples of action creation GUI 450 are shown in Figures 4B, 4C and 4D in which individual actions are defined. For example, as shown in Figure 4B, the action "Send email to users" is selected, corresponding to an action where an email is sent to one or more users. The users to receive the e-mail can be specified via a dropdown (such as all users, a specified subset of users and/or specific individual users). An input can also be provided to define a trigger delay, such that the action is performed after a specified delay once triggered.

As another example, as shown in Figure 4C, the action "Encrypt files" is selected, corresponding to an action where the file containing the sensitive data is encrypted. Additional inputs can be provided to allow notifying the user via an e-mail and/or pop-up message (which can include a specified message, a copy of the file(s) concerned and/or an input to allow to provide a justification), and to allow notifying the user's supervisor. An input can also be provided to define the trigger delay, in the present case corresponding to 1 week.

A further example, as shown in Figure 4D, the action "Send message to the offender" is selected, corresponding to an action where the user is notified of their non-compliant action. Inputs can be provided to allow notifying the user via an email and/or pop-up message (which can include a specified message, a copy of the file(s) concerned and/or an input to allow to provide a justification), and to allow notifying the user's supervisor. An input can also be provided to define the trigger delay.

Although particular actions have been shown and described, it is appreciated that other actions can be defined as well. For example, in some embodiments, actions can include calling webhooks to share detection results with another service and/or to trigger actions involving third party services.

Although some exemplary GUI configurations were shown and described, it can be appreciated that a different GUI, using different graphical widgets, can be provided by the rule-definition interface 314 to create, review and modify policy rules. It can equally be appreciated that policy rules can additionally or alternatively be defined using plain text, e.g., through a rule-specification language, in which case the rule-definition interface 314 can provide a purpose-made or generic, graphical or non-graphical user interface. Moreover, it can be appreciated that policy rules can be defined automatically or semi-automatically, for instance by using machine learning, and in particular models such as generative models trained to accept a data governance policy and to provide a set of rules, for instance using a rule-specification language, corresponding to the data governance policy.

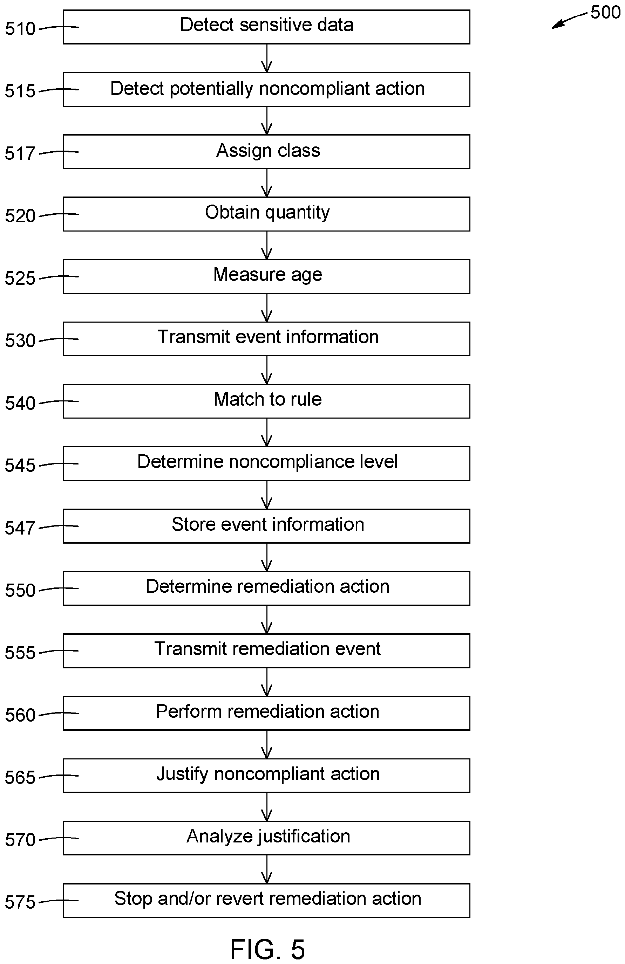

As can be appreciated, the system 1 can be used to implement a method to monitor compliance with a data governance policy in a customer environment and to provide feedback in case of noncompliance. With reference to Figure 5, an exemplary method 500 for automatically monitoring compliance and providing feedback is shown according to an embodiment. In the illustrated method, sensitive data are detected on devices such as endpoint devices or accessible to devices, potentially noncompliant actions are detected on devices or performed through devices, and corresponding event information is transmitted to an event processor and to a policy evaluator for storage, and to match against a set of policy rules and determine whether the event corresponds to a noncompliant action and requires a remediation action to be activated.

The method 500 can include a first step 510 of detecting, via a plurality of sensors deployed within customer environment, sensitive data within data assets accessible via the plurality of devices. As described above, the sensors can correspond to software deployed to the plurality of devices. Accordingly, the method can include preliminary steps of deploying the sensor software to the plurality of devices and/or to servers responsible for making data assets available, and registering the software with the service provider environment.

The detection of sensitive data can be carried out by a detection module operating as part of the sensor deployed to each of the plurality of devices. As can be appreciated, the sensitive data can be detected during monitoring of data assets on a plurality of data sources within customer environment. In some embodiments, monitoring data assets can include continuously and/or regularly monitoring data assets stored on, or accessible from, the plurality of devices to identify data assets containing data matching one or more predefined patterns or structures. As explained above, detection of sensitive data can be implemented using regular expressions or other text-based pattern recognition techniques. In such embodiments, a positive pattern match will correspond to a sensitive data detection event. In some embodiments, monitoring can include performing a full scan, wherein all the data assets stored on or accessible from the device are searched for sensitive data, and/or a targeted scan, wherein only data assets that are newly stored on or accessible from the device or have changed since the last scan are searched for sensitive data.

Upon detecting sensitive data, a subsequent step 515 can include detecting, via the same plurality of sensors, that a potentially noncompliant action has been performed on or through one of the devices. Potentially noncompliant actions can include both actions that are outright noncompliant with a data governance policy, e.g., copying a remotely held data asset to a removable storage device, and actions that may be indicative of a noncompliance occurring, e.g., copying text from a remotely held data asset to the clipboard.

Potentially noncompliant actions can for instance include filesystem-related actions, including for instance copying files, clipboard-related actions, including for instance copying data to a clipboard, pasteboard, cut-buffer, selection, clip or other type of memory buffer, application-related actions, including for instance entering data in graphical widgets of applications running on a device, display-related actions, including for instance displaying data on a monitor or printing it.

The monitoring of certain potentially noncompliant actions can be implemented using facilities provided by application programming interfaces provided by operating systems or applications. As an example, in devices running the Microsoft^{™} Windows^{™} operating system, the Win32 API provides facilities to create notifications for filesystem events, to read the content of the clipboard, to access a list of windows corresponding to currently running applications and the text they contain and to capture an image from the graphics device interface. As another example, in devices running the macOS^{™} operating system, Cocoa^{™} offers similar facilities as the Win32 API to monitor the filesystem, the pasteboard, text fields and the display. As an additional example, in devices 110 running a POSIX or POSIX-compliant operating system such as Linux, UNIX^{™} or BSD and, optionally, a graphical environment such as the X Window System or Wayland, libraries and APIs such as D-Bus, GTK, kqueue, inotify, Qt and Xlib provide similar facilities. It can be appreciated that certain applications offer an API of their own which can advantageously be used to monitor data transiting through these applications, for instance the extension API for Chromium^{™}-based web browsers or Microsoft^{™} Graph for Microsoft 365^{™}.

Detecting a potentially noncompliant action can include determining which user is responsible for the action. As an example, based on the credential used to access the endpoint device and/or the data assets, a username can be determined, and through a suitable protocol such as the Lightweight Directory Access Protocol or an implementation of such as suitable protocol such as OpenLDAP^{™} or Active Directory^{™}, the username can be associated with a person.

Detecting both sensitive data in step 510 and a potentially noncompliant action related to the sensitive data in step 515 triggers noncompliance events, which can be processed in steps 520 to 560.

The method 500 can include a step 520 of measuring a quantity of the sensitive data detected in step 510 and concerned by the action detected in step 515. In embodiments where step 510 is performed using regular expressions or other text-based pattern recognition techniques, the quantity of sensitive data can correspond to the number of positive matches triggered by the regular expression or pattern in a data asset. The quantity of sensitive data can for instance be a simple integer or a more complex algebraic structure. For instance, a quantity can be measured independently for each triggered regular expression or pattern and/or for different levels of granularity, e.g., in the file, in all files of the same directory, in all files of the same directory and in subdirectories or the same directory, optionally up to a configurable level of recursion, in all files of the same filesystem, and/or in all files of the same storage device. A quantity can also be measured counting any number of identical sensitive data as a single datum or not. It can therefore be appreciated that the quantity of sensitive data can correspond, e.g., to an array of integers corresponding to quantities measured in different ways.

The method 500 can include a step 525 of measuring an age of the sensitive data or data assets detected in step 510 and concerned by the action detected in step 515. For instance, when sensitive data is detected at step 510, details of the detection including a timestamp, e.g., an integer representing the number of seconds elapsed since the Unix epoch, can be stored in a data asset accessible to the sensor 120, e.g., a local database, such that when a noncompliance event is triggered, the age of the sensitive data can be measured as the difference between the current time and the timestamp. Additionally or alternatively, step 525 can include using facilities provided by an API or an utility provided by or with an operating system or a filesystem to obtain a timestamp associated with the time a data asset was created, last modified, last changed and/or last accessed, the age of the data asset being measured as the difference between the current time and one or more of these timestamps. An age can be measured for instance for the oldest, the youngest, or all the sensitive data associated with a noncompliance event. It can therefore be appreciated that the age of sensitive data can correspond, e.g., to an array of integers corresponding to ages in seconds measured in different ways.

The method 500 can include a step 530 of transmitting noncompliance event information obtained during the previous steps 510 to 525, for instance from a customer environment 100 to a service-provider environment 200. The event information can include, for instance the class, quantity and age of sensitive data and the nature of the potentially noncompliant action determined in previous steps. In some embodiments, the transmission can be carried out over a secured communication link. In such embodiments, as part of step 530, the customer-side communication module 122 can obtain, over a communication link with the service provider-side communication module 212, a public key that is part of an asymmetric key pair that also includes a private key controlled by the service provider. It is appreciated that the public key can be relatively static, in which case it can be stored for instance in the sensor 120 until a defined expiration time. Using the public key, the customer-side communication module 122 can then encrypt the event information. Step 530 can include transmitting the encrypted event information over a communication link between the customer environment 100 and the service provider environment 200, for example from an endpoint device 110 in the customer environment 100 to a server in the service provider environment 200. The transmission can for instance occur over a TCP/IP network such as the Internet, using a protocol such as HTTP. It can be appreciated that alternative means of establishing a secured communication link between the customer and the service provider environments 100 and 200 and of sending information can be used. For instance, to establish a secured communication link, any cryptographic protocol, such as for instance SSL or TLS, can be used, along with any key exchange method, such as for instance RSA or Diffie-Hellman, using a signed or an unsigned public key, and any cipher, such as for instance AES or Camellia. Moreover, any data transmission protocol can be used to transmit the payload, such as for instance FTP, SCP or AS2.

The method 500 can include a step 540 of matching the event information to at least one policy rule. Step 540 can for instance include evaluating the condition or each subcondition of each rule against the event information, such that if the condition of a rule, whether atomic or compositional, evaluates to "true", the rule matches the event information. The process can be halted as soon as a matching rule is found, producing at most one match, or can be continued until all rules have been evaluated, possibly producing a plurality of matches. When a plurality of matches are produced, all the matched rules can be passed along to the next step. It can be appreciated that many optimizations are possible for this process. As an example, the rules can be indexed with respect to various types of information, such as the class(es) of sensitive data or the class(es) of users they are concerned which, such that only potentially relevant rules are evaluated. Additionally or alternatively, rules can be ordered with respect to the stringency of specific conditions, e.g., from the rule requiring the smallest quantity of sensitive data to the one requiring the largest quantity, in order to minimize the number of rules that must be evaluated before a match is found. Additionally or alternatively, all subconditions of a compositional condition need not necessarily be evaluated: for instance, if a compositional condition is a conjunction of two subconditions and the first subcondition evaluates to "false", it can be determined that the rule does not match without evaluating the second subcondition; or if a compositional condition is a disjunction of two subconditions and the first subcondition evaluates to "true", it can be determined that the rule matches without evaluating the second subcondition. If the event information matches at least one policy rule, the event is confirmed as a noncompliance event.

In response to confirming the event as a noncompliance event, the method 500 can include a step 545 of determining the noncompliance level. The noncompliance level can for instance correspond to the number of times or the frequency at which the user that triggered the noncompliance event that matched a rule does not comply with said rule, over a set period of time or not, as reflected by past events stored in the database 250. If more than one rule is passed on from previous step 540, a noncompliance level can be determined for each rule. In this case, all matched rules can be passed on to the next step along with their corresponding noncompliance levels, or an alternative strategy can be used, e.g., passing on only the rule with the highest noncompliance level. As explained above, the database 250 can be implemented using a graph database such as an RDF store or an RDBMS. In either case, the noncompliance level determination step 545 can include first generating and executing, e.g., one or more SPARQL or SQL "SELECT" statements or Cypher "MATCH" statements to retrieve past events associated with the user. As an example, if no past event associated with the user is retrieved, the noncomplioance level can be set to the lowest possible value, e.g., 1. As another example, if a number of past events associated with the user is retrieved, the noncompliance level can be set to the number of past events that match the policy rule that the current event does not comply with plus one, reflecting the current event.

The method 500 can include a step 547 of storing the event information, e.g., in a database 250. As explained above, database 250 can for instance be implemented using a graph database such as an RDF store or an RDBMS. In either case, the storage step 535 can include generating and executing, e.g., one or more SPARQL or SQL "INSERT" statements or Cypher "CREATE" statements. As can be appreciated, depending on the database being used to store the detection event information, different steps can be carried out to create new records or objects in the database, and/or update existing records or objects to provide new relationships. Step 547 can include storing all available information regarding a noncompliance event, including for instance the nature of the action, the user, the class, quantity and/or age of the sensitive data, the matched rule, and/or the noncompliance level.

Once at least one rule has been matched and a noncompliance level has been determined, the method 500 can include a step 550 of determining at least one remediation action to be taken. Remediation actions can include for instance causing a dialog box to open on a monitor of the endpoint device of the user, for instance forcing the user to read a message about the policy that was infringed, clicking a checkbox indicating that they understand and/or clicking a button of the dialog box before they can resume their workflow, sending an email to the user, encrypting a data asset containing sensitive information or replacing each sensitive information in a data asset with a cryptographic token, and/or moving the data asset for instance to a secured vault, or interrupting the workflow of a user by causing the endpoint device of the user to enter a locked state, such that the user is incapable of resuming their workflow. It is appreciated that a specific rulenoncompliance level can be associated with no remediation action, such that the event is stored in the database, such that a future noncompliance event matching the same rule by the same user will correspond to a higher noncompliance level, but that no action is taken at this time. Each policy rule can be associated with a map from noncompliance levels onto one or more remediation action(s), such that determining the disobeyed rule and the noncompliance level is sufficient to obtain the associated remediation action(s). A remediation action or a sequence of remediation actions form a remediation event. If more than one rule are passed on from the previous step 545, different strategies are possible. For instance, either the remediation action with the highest disruptiveness can be selected, or the remediation event can contain remediation actions from a number of rules.

The method 500 can include a step 555 of transmitting the determined remediation event back, for instance from the service-provider environment 200 to the customer environment 100. As an example, the same or a similar link as the one used to transmit the noncompliance event information in step 530 can be used.

The method 500 can then include a step 560 of executing the transmitted remediation action(s) on the endpoint device 110 in which the noncompliant event occurred. The sensor 120 can be configured to perform the remediation actions. For instance, the sensor 120 can be configured to display a dialog box and freeze the screen, for instance using an API or a facility of the operating system or another application, such that the user of endpoint device 110 cannot interact with any other application until a configurable amount of time has elapsed and/or a specific action has been taken, e.g., clicking a checkbox or a button of the dialog box. The sensor 120 can further be configured to send emails, for instance using a utility such as sendmail or an API such as Microsoft^{™} Graph. The sensor 120 can further be configured to encrypt data assets, for instance using a library such as Libgcrypt or an application such as VeraCrypt. As an example, public-key cryptography can be used such that the sensor 120 can encrypt a data asset using a public key associated with a person, e.g., the user or the user's manager, such that the data asset can only be decrypted by the person. Alternatively or additionally, cascade encryption can be used such that the sensor 120 can encrypt a data asset using more than one public keys associated with a corresponding number of persons, for instance the user and the user's manager, such that the data asset cannot be decrypted by one person alone but can be decrypted upon agreement by all the persons. The sensor 120 can further be configured to move a data asset, e.g., to a secure vault specified by the sensor's configuration or by a policy rule definition. The sensor 120 can further be configured to lock the endpoint device 110, for instance using an API or a facility of the operating system or another application.

It is appreciated that remediation actions are more effective as awareness-increasing actions if they occur in real time or in substantially real time with respect to the noncompliant action performed by the user of endpoint device 110. This can require at least steps 520 to 560 to be performed within critical time constraints, for instance within a defined maximum time period of, e.g., 30 seconds or less. As an example, it can be desirable to opt for rapid communication links over which to perform steps 530 and 555, e.g., using wired over wireless links and/or using UDP over TCP as a communication protocol, and/or to perform steps 535 to 545 on dedicated, fast hardware, and/or using a critical time constraint-aware and/or preemptive priority-enabled scheduler.

Although in the illustrated embodiment the remediation action determined in step 550 is transmitted to endpoint device such that the endpoint device can carry out the remediation action, it is appreciated that other configurations are possible. In some embodiments, some remediation actions can be carried out by the policy evaluator 220, and/or otherwise directly from within the service provider environment 200 without having to transmit the remediation action to endpoint device. As an example, if the remediation action involves sending an e-mail, the email can be sent or initiated from a server within the service provider environment 200. As another example, if a server in the service provider environment 200 has access to the data asset that is the object of the noncompliance event, the server can directly apply remediation action such as encrypting the data asset or moving the data asset to a secure vault.

In some embodiments, method 500 can include a step 565 of allowing or forcing the user to justify the potentially noncompliant action detected. Certain remediation actions can define a natural way to provide this justification. As an example, if a remediation action includes sending an email message, an SMS message and/or an instant message, the justification can be provided by prompting the user to respond in writing through the same channel. As another example, if a remediation action includes causing a dialog box to open on a monitor of an endpoint device, a text box can be provided to prompt the user to provide a justification in writing. More disruptive remediation actions can involve more disruptive means to provide a justification. As an example, if an endpoint device is locked, or if a data asset is moved, quarantined or deleted, it may be necessary for the user to write to or call a manager or an analyst to provide the justification.

When a justification is provided, a subsequent step 570 can include analyzing the justification and make a determination, based on the event information collected and on the justification, of whether the potentially noncompliant action was indeed noncompliant or actually compliant. This determination can be made by a human, for instance by a manager or by an analyst. In some embodiments, this determination can be made through machine learning, for instance using a trained classifier or a large language model, as described above.

If a determination is made that the action was in fact compliant, for instance because the user has a valid work-related reason for having performed the action and is in compliance with the data governance policy, then in a final step 575 the remediation action can be stopped, if applicable, for instance unlocking the endpoint device and/or closing the dialog box, and/or reverted, if applicable, for instance undeleting the file, moving the file back to its original path, and/or unquarantining the file, thereby closing the action-feedback loop.

Although particular embodiments and advantages have been described above, it is appreciated that these are for illustrative purposes only. Additional embodiments and advantages may become apparent to a person of skill in the art upon reading the foregoing specification. Moreover, a person of skill in the art will appreciate that various modifications and changes can be made without departing from the scope of the invention. Accordingly, the specification and figures are to be regarded in an illustrative rather than a restrictive sense, and all such modifications are intended to be included within the scope of present teachings.

## Claims

1. A method for providing data governance policy feedback to a user, the method comprising:
detecting (510) sensitive data within data assets (115) accessible by an endpoint device (110);
detecting (515), by a sensor (120), a potentially noncompliant action involving the sensitive data performed by the user at the endpoint device;
matching (540) the potentially noncompliant action against a condition defined by a rule from a set of rules implementing the data governance policy;
storing (535) information relating to the potentially noncompliant action, the user, and the rule; and
applying (560) at least one remediation action from a set of remediation actions defined by the rule, the at least one remediation action comprising a workflow-disruptive action.

2. The method according to claim 1, comprising quantifying a noncompliance level of the potentially noncompliant action, wherein the noncompliance level is quantified based on at least one of:
a predefined importance level of the rule;
a frequency in which the rule is triggered or broken by the user;
a quantity of sensitive data involved in the potentially noncompliant action;
a type of sensitive data involved in the potentially noncompliant action;
a combination of types of sensitive data; and
a metric based on at least a behaviour of the user and a behaviour of a set of peers of the user,
wherein the at least one remediation action from the set of remediation actions defined by the rule is selected based at least in part on the noncompliance level.

3. The method of claim 2, wherein detecting the sensitive data comprises identifying a portion of text within the data asset matching a predefined pattern, the method further comprising counting a number of matches of the matched pattern within a scope of the data assets to obtain a quantity of the sensitive data detected (520), wherein:
the condition defined by the rule is based at least in part on the quantity of the sensitive data detected;
the noncompliance level is quantified based at least in part on the quantity of the sensitive data detected; and/or
the at least one remediation action from the set of remediation actions defined by the rule is selected based at least in part on the quantity of the sensitive data detected.

4. The method of any one of claim 2 or 3, further comprising assigning a class to the sensitive data (517), wherein the type of the sensitive data corresponds to the class of the sensitive data, and wherein:
the condition defined by the rule is based at least in part on the class of the sensitive data;
the noncompliance level is quantified based at least in part on the class of the sensitive data; and/or
the at least one remediation action from the set of remediation actions defined by the rule is selected based at least in part on the class of the sensitive data.

5. The method of any one of claims 2 to 4, further comprising measuring (525) an age corresponding to at least one of a time elapsed since the sensitive data was first detected and a time elapsed since the data asset was created, wherein:
the condition defined by the rule is based at least in part on the age;
the noncompliance level is quantified based at least in part on the age; and/or
the at least one remediation action from the set of remediation actions defined by the rule is selected based at least in part on the age.

6. The method of any one of claims 2 to 5, wherein a disruptiveness level of the remediation action increases as the noncompliance level increases.

7. The method of any one of claims 1 to 6, wherein applying the remediation action occurs in real-time with detecting the potentially noncompliant action.

8. The method of any one of claims 1 to 7, wherein applying the remediation action comprises soliciting the user via the enpoint device to provide (565) an input to justify the potentially noncompliant action.

9. The method of claim 8, further comprising:
analyzing (570) the input to determine whether the potentially noncompliant action is compliant or noncompliant; and
in response to the potentially noncompliant action being determined to be compliant, stopping and/or reverting (575) the at least one remediation action.

10. The method of any one of claims 1 to 9, wherein the potentially noncompliant action comprises at least one of:
copying a sensitive file to a local storage;
copying the sensitive file to a removable storage;
retaining the sensitive file on the local storage longer than a first configurable duration;
copying the sensitive data to a clipboard, sending the sensitive data via an internal communication channel;
sending the sensitive data via an external communication channel;
causing the sensitive data to be displayed longer than a second configurable duration; and
causing a quantity of the sensitive data above a configurable quantity threshold to be displayed over a duration shorter than a third configurable duration.

11. The method of any one of claims 1 to 10, wherein the remediation action comprises at least one of:
causing information about the potential noncompliant action to be stored;
sending a report to an analyst;
sending a report to a manager of the user;
invoking a first API to cause a dialog box to appear on a display of the endpoint device to alert the user;
invoking a second API to cause an instant message to be sent to the user;
invoking a third API to cause an email message to be sent to the user;
encrypting a file containing the sensitive data;
moving the file to storage local to or distant from the endpoint device, and inaccessible to the user;
quarantining the file;
deleting the file; and
locking the endpoint device.

12. The method of any one of claims 1 to 10, wherein applying the at least one remediation action comprises at least:
moving a file containing the sensitive data to a new data asset, wherein the user has no file-system permissions over the new data asset; and
create an information file, wherein the pathname of the information file is the pathname of the file containing the sensitive data before moving.

13. A system for providing data governance policy feedback to a user, the system comprising:
a customer environment (100) comprising:
at least one endpoint device (110),
a plurality of data assets (115) accessible via the at least endpoint device, and
at least one sensor (120) configured to monitor usage of the plurality of data assets by the at least one endpoint device, the sensor comprising:
a detection module configured to detect sensitive data from data assets accessible via the at least one endpoint device,
a surveillance module configured to detect a potentially noncompliant action performed by the user on a particular device from the at least one endpoint device, and
at least one remediation module configured to perform at least one remediation action in response to a potentially noncompliant action being detected by the surveillance module; and
a service provider environment (200) in communication with the at least one sensor (120) to receive information information relating to the potentially noncompliant action and to send the at least one remediation action to be performed, the service provider environment comprising:
an event storage module (214) configured to store the information in a database,
a memory (224) comprising a set of rules implementing the data governance policy, wherein each rule defines at least a condition and a set of remediation actions,
a matching module (226) configured to match the information against the condition of each rule from the set of rules, and
a remediation-determination module (230) configured to select the at least one remediation action from the set of remediation actions of matched rule.

14. The system of claim 13, wherein the service provider environment further comprises a level-determination module (228) configured to quantity a noncompliance level based on at least one of:
a predefined importance level of the matched rule;
a frequency in which the matched rule is triggered or broken by the user;
a quantity of sensitive data involved in the potentially noncompliant action;
a type of sensitive data involved in the potentially noncompliant action;
a combination of types of sensitive data; and
a metric based on at least a behaviour of the user and a behaviour of a set of peers of the user,
wherein the at least one remediation action from the set of remediation actions defined by the rule is selected based at least in part on the noncompliance level.

15. The system of claim 14, wherein the surveillance module is configured to detect the sensitive data by identifying a portion of text within the plurality of data assets matching a predefined pattern, wherein the sensor further comprises a quantification module (126) configured to count a number of matches of the matched pattern within a scope of the plurality of data assets to obtain a quantity of the sensitive data detected, and wherein:
the condition defined by each rule is based at least in part on the quantity of the sensitive data detected;
the noncompliance level is quantified based at least in part on the quantity of the sensitive data detected; and/or
the at least one remediation action from the set of remediation actions defined by the rule is selected based at least in part on the quantity of the sensitive data detected.
